# EUROPEAN PATENT APPLICATION

(11) **EP 0 667 470 A2**
(43) Date of publication of application: **16.08.1995**
(21) Application number: 95300836.4
(22) Date of filing: 10.02.1995
(51) Int. Cl.: B60K 20/04, F16H 59/04, F16H 59/10, F16H 61/36

(54) **Transmission shifter and method of assembly thereof**

(30) Priority: 10.02.1994 US 194408
(71) Applicant: JSJ Corporation, Grand Haven, Michigan 49417 (US)
(72) Inventor: Ruiter, Andrew K., Grand Haven, Michigan 49417 (US); Brock, Robert D., Grand Haven, Michigan 49417 (US); Botella, Octavi Lorente, ES-08400 Granollers, Barcelona (ES)
(74) Representative: Robinson, Anthony John Metcalf

(57) **Abstract**

A shifter (30) includes a polymeric base (32), and a polymeric tower (34) attached to the base. A polymeric retainer (38) is configured to twist lock onto the tower to retain a socket-forming bushing (40) and a shift stick (42) including a socket-engaging ball (44) for pivotally mounting the shift stick to the base. A bell crank (46) is pivotally mounted to the tower by a snap-lock pivot pin (160), and includes a leg that pivotally engages an integral arm (50) that extends from the ball. The lower end of the shift stick is connected to a first transmission cable and a second leg on the bell crank is connected to a second transmission engaging cable. An automatic transmission shifter (200,200') is also provided including a polymeric base (32), a polymeric mount (202) attached to the base for pivotally supporting a shift stick, and a polymeric detent plate (204) attachable to the mount. An insert molded body (210) that defines a pivot-receiving section for pivotally mounting the shift stick (208,208') to the mount. The body includes a trailing section (290) that defines multiple depressions (216), and a feel positioner roller (218) attached to the mount by a leaf spring (310) which biases the roller into engagement with the depressions.

## Description

The present invention relates to transmission shifters for vehicles, and more particularly concerns shifters including components facilitating manufacture and assembly.

Transmission shifters are often assembled at locations remote from the part manufacturing site, especially where the parts will be assembled and used internationally. In such cases, it is an important advantage to be able to reliably assemble the shifters without the use of skilled labour and sophisticated tools, and without the need for substantial quality control. Further, costs competitive parts which do not require substantial machining and secondary finishing are desired. Further, modularity, interchangeability, and ease of replacement of components are desired.

Thus, shifters solving the aforementioned problems are desired.

An object of the present invention is to alleviate the problems of the prior art.

According to one aspect of the present invention there is provided a transmission shifter with the features of claim 1. Further aspects of the invention are set out in claims 5, 6, 7, 9, 11 and 13. The invention may additionally reside in any combination of features of any of the aforementioned aspects.

In a preferred construction there is provided a transmission shifter for vehicles, the shifter including a shift stick moveable between gear engaging positions. Preferably, the transmission shifter includes a base adapted for mounting to a vehicle, and a tower attached to the base and including tab engaging flanges. Preferably, a socket defining bushing is positioned on the tower. Preferably, the shift stick includes a ball defining member mateably pivotally engaging the socket defining bushing, and a retainer including tabs configured to snap-lock onto the tab engaging flanges of the tower to retain the ball defining member in operative engagement with the socket defining bushing and to retain the socket defining bushing on the tower. In a preferred form, the tower, the socket defining bushing, the ball defining member and the retainer are molded from polymeric materials.

In another preferred construction there is provided an automatic transmission shifter for vehicles, the shifter including a shift stick moveable between gear defining positions. Preferably, the shifter includes a base adapted for mounting to a vehicle, the base including a mount for pivotally mounting the shift stick to the base for movement about an axis of rotation. Preferably, a detent plate is attached to the base and includes notches defining the gear defining positions. A pawl is preferably operably mounted to the shift stick for engaging the notches. The shift stick preferably includes a body having depressions and a spring biased roller is attached to the mount for engaging the depressions, the body and the roller defining a feel positioner which provides a positive and aesthetic feel to a person shifting the shift stick between the gear defining positions.

A preferred method of assembly includes providing a base; assembling a tower in a first direction to the base; and assembling a bushing, a shift stick and a retainer to the tower parallel the first direction, the shift stick including a ball and the bushing defining a socket for pivotally receiving the ball. The method preferably further includes rotating the retainer about an axis parallel the first direction to twist lock the retainer to the tower and thus pivotally retain the shift stick on the bushing and the bushing to the tower.

Another preferred method of assembly comprises a method of assembling an automatic transmission shifter. The method preferably includes providing a base adapted for mounting to a vehicle, assembling a mount to the base in a first direction, assembling a shift stick to the mount parallel the first direction, and pivotally securing the shift stick to the mount. The method preferably further includes assembling a detent plate to the mount adjacent the shift stick along the first direction, and assembling a feel positioner roller to the mount for engaging depressions on a body extending from the shift stick.

Preferably, the base includes bosses for engaging either the manual transmission tower or the automatic transmission tower and, when the shifter is assembled, the tower is secured to the bosses. Preferably, the bosses extend in a generally vertical direction, and the tower is secured to the base along the generally vertical direction. Preferably, the base includes a flange configured to be sealingly attached against a vehicle floor pan, and the method of assembly includes a step of sealingly attaching the base to a vehicle floor pan.

Preferably, the base includes a front wall having at least one aperture therein for receiving a cable sleeve, the aperture defining a cable sleeve engaging connector, and the method of assembly includes attaching the cable sleeve to the cable sleeve engaging connector, including the step of extending the cable sleeve and a telescopable cable through the aperture.

When an automatic transmission shifter is provided with the features of claim 6, the body is preferably insert molded onto the shift stick. Preferably, the body comprises a moulded polymeric membrane and includes a pivot-defining section for pivotally engaging the mount on the base. Preferably, the body includes an arm configured for connection to a transmission shift cable. Preferably, the arm includes a universal ball connector for engaging the transmission shift cable. Preferably, the body includes at least one aperture for receiving an interlock device for locking the body and in turn the shifter in a particular one of the gear-defining positions.

When an automatic transmission shifter is provided as set out in claim 7, a second shifter interlock hole is preferably defined in the insert-molded body, spaced from the first shifter interlock hole, the shifter interlock hole being engageable by the extendable pin to retain the shift stick in a neutral position. Preferably, the first and second shifter interlock holes are defined in a continuous arcuately-shaped aperture. Preferably, the base includes a connector for holding an ignition key interlocking cable, and the insert-molded body includes a flange for engaging a telescopable cable extending from the ignition key interlocking cable when the shift stick is in the park position.

A method of assembly as defined in claim 9 preferably includes providing flanges on the tower and mating tabs on the retainer, the flanges being spaced apart to permit assembly of the retainer to the tower in the first direction, the flanges further defining space thereunder for receiving flanges upon the step of rotating, and the step of assembly preferably includes extending the tabs between the flanges, and the step of rotating preferably includes rotating the tabs under the flanges. Preferably, the tabs and flanges include a depression and mating protrusion for providing a detent-type connection for frictionally retaining the tabs under the flanges, and the step of rotating preferably includes engaging the depression and the mating protrusion.

In a preferred version of the method as set out in claim 11, the base includes either bosses or aligned apertures facing along the first direction, and the mount includes the other of bosses and aligned apertures, and the step of assembly of the mount to the base includes extending screws through the aligned apertures into the bosses to secure the mount to the base. Preferably, the mount includes one of second bosses and second aligned apertures facing along the first direction, and the detent plate includes the other of said second bosses and said second aligned apertures, and the step of assembling the detent plate to the mount includes extending second screws through the second apertures into the second bosses to secure the detent plate to the mount. Preferably, the detent plate includes a pair of parallel arching side members each having gear position defining notches thereon, and the shift stick includes a pawl having ends extending in opposing directions, and the method of assembly includes a step of extending the shift stick between the pair of parallel arching side members of the detent plate with the opposing ends of the pawl engaging the gear position defining notches in the detent plate.

These and other features, advantages and objects of the present invention will be further understood and appreciated by those skilled in the art by reference to the following specification, claims and appended drawings.

The present invention may be carried out in various ways and various preferred embodiments of shifter mechanisms and assembly methods in accordance with the invention will now be described, by way of example, with reference to the accompanying drawings, in which:
Fig. 1 is a side elevational view of a preferred embodiment of a manual transmission shifter in accordance with the present invention;
Fig. 2 is a front elevational view of the shifter shown in Fig. 1;
Fig. 3 is a top view of the shifter shown in Fig. 1;
Figs. 4-6 are orthogonal views of the shifter base shown in Fig. 1;
Figs. 7-8 are side and plan views of a gasket for sealing against a perimeter and top of the base shown in Fig. 1;
Figs. 9-11 are bottom, side and top views of the tower shown in Fig. 1;
Figs. 12-14 are cross-sectional views taken along the planes XII-XII, XIII-XIII and XIV-XIV in Fig. 9;
Fig. 15 is an enlarged view of the circled area numbered XVI in Fig. 13;
Figs. 16-18 are front, rear and top views, respectively, of the retainer shown in Fig. 1;
Fig. 19 is a cross-sectional view taken along the plane XIX-XIX in Fig. 18;
Figs. 20-21 are side and top views of the socket defining bushing shown in Fig. 1;
Fig. 22 is a cross-sectional view taken along the plane XXII-XXII in Fig. 21;
Fig. 23 is a side view of a ball-forming member that is insert molded onto the shift stick shown in Fig. 1, the shift stick having been removed;
Fig. 24 is a cross-sectional along the plane XXIV-XXIV in Fig. 23;
Figs. 25-26 are side and front views, respectively, of the shift stick including the insert molded ball forming member with an integral bell crank actuating arm;
Fig. 27 is a cross-sectional view through an arm engaging bushing that secures the bell crank to the bell crank actuating arm;
Figs. 28-29 are side and front views of the bell crank shown in Fig. 1;
Fig. 30 is a side view of a pivot pin for pivotally mounting the bell crank to the tower as shown in Fig. 1;
Fig. 31 is a side view of a preferred embodiment of an automatic shifter assembly in accordance with the present invention;
Fig. 32 is a top view of the shifter shown in Fig. 31;
Fig. 33 is an end view of the shifter shown in Fig. 31;
Fig. 33a is a side view of the shift stick and an insert molded body shown in Fig. 31;
Fig. 33b shows an alternative shift stick that can be used in the shifter shown in Fig. 31;
Fig. 34 is a side view of the mount shown in Fig. 31;
Fig. 35 is a left end view of the mount shown in Fig. 34;
Fig. 36 is a right end view of the mount shown in Fig. 34;
Fig. 37 is a top view of the mount shown in Fig. 34;
Figs. 38-40 are side, right end and top views of a detent plate shown in Fig. 31;
Fig. 41 is a cross-sectional view taken along the plane XLI-XLI in Fig. 38;
Figs. 42-44 are side, top and end views of a feel positioner roller subassembly as shown in Fig. 31;
Fig. 45 is a cross-sectional view taken along the plane XLV-XLV in Fig. 43; and
Figs. 46-48 are side views showing the shift stick in a parking position, a neutral position and a drive position, respectively, for the shifter shown in Fig. 31.

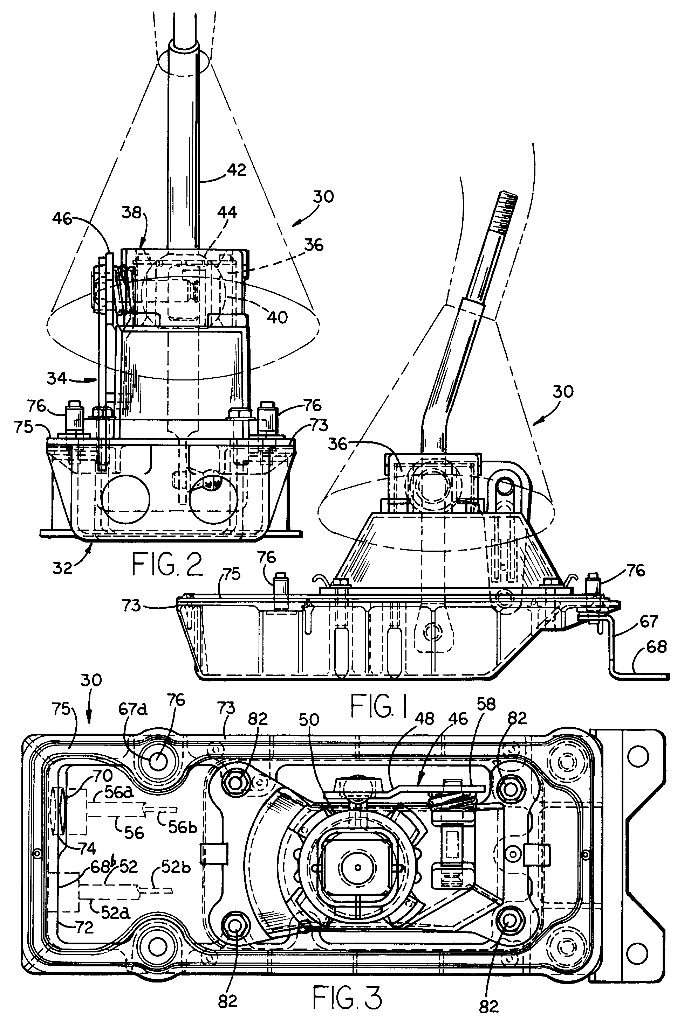

A preferred embodiment of a manual transmission shifter 30 (Figs. 1-3) in accordance with the present invention includes a base 32 adapted for mounting to a vehicle, and a tower 34 configured to mount on base 32. A retainer 38 defines a recess 36 and is configured to engage tower 34 to retain a socket-forming bushing 40 within recess 36. A shift stick 42 includes a ball 44 pivotally mounted in socket-forming bushing 40, ball 44 being retained in bushing 40 by retainer 38. A bell crank 46 (Fig. 3) is pivotally mounted to tower 34, and includes a first leg 48 operably pivotally connected to an integral crank actuating arm 50 extending from ball 44. A first cable 52 is pivotally operably connected to the lower end of shift stick 42, and a second cable 56 is operably pivotally connected to a second leg 58 of bell crank 46. Optimally, shifter 30 can be assembled from the "top down" in a manner that facilitates assembly. Further, base 32, tower 34, retainer 38, bushing 40 and ball 44 are molded polymeric members that facilitate low cost manufacture of shifter 30. Still further, members 32, 34, 38, 40 and 44 are configured for snap-lock assembly to reduce manufacturing costs and allow a modular build and a "top down" build.

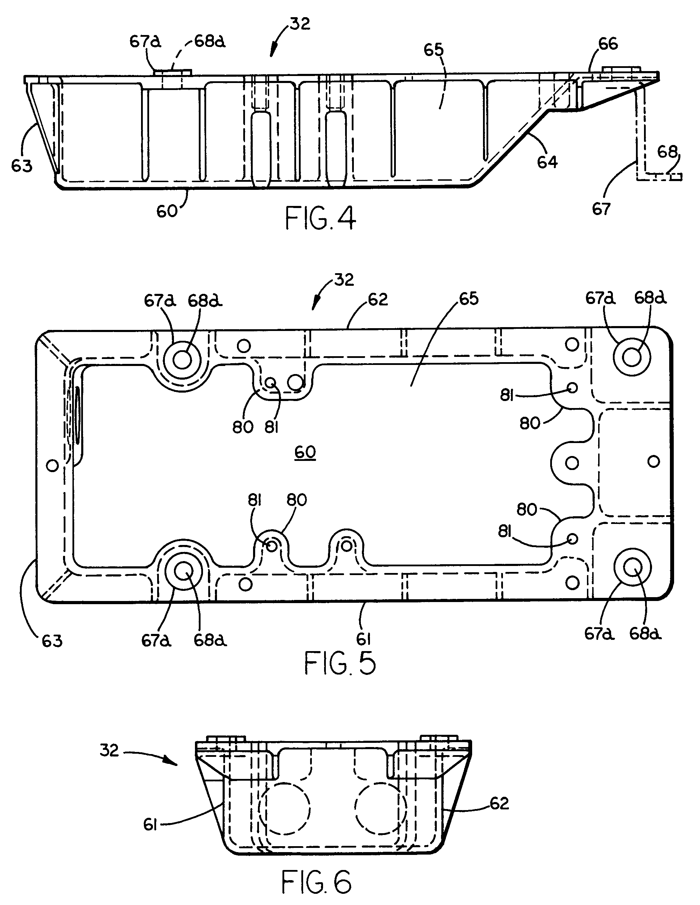

Molded base 32 (Figs. 4-6) includes a bottom wall 60, sidewalls 61 and 62, front wall 63 and rear wall 64 defining a pocket 65. Flanges 66 extend from rear wall 64 and an attachment bracket 67 including attachment holes 68 is secured to flange 66. Additional attachment flanges 67a are located in the top of sidewalls 61 and 62 adjacent front wall 63 and rear wall 64, flanges 67a including attachment holes 68a. Attachment holes 68 and 68a are each engaged by a headed stud such as studs 76 (Fig. 1) to secure attachment of base 32 to a vehicle component such as a vehicle floor pan, as discussed below. Telescoping cable assemblies 52 and 56 include sleeves 52a and 56a, respectively (Fig. 3), and telescoping cables 52b and 56b, respectively, operably mounted in sleeves 52a and 56a, respectively. Front wall 63 includes a pair of holes 68b and 70 for receiving the ends of cable sleeves 52a and 56a, and a pair of U-shaped metal retainer clips 72 and 74 frictionally engage the cable sleeve ends to secure the cable sleeve ends within holes 68b and 70, respectively.

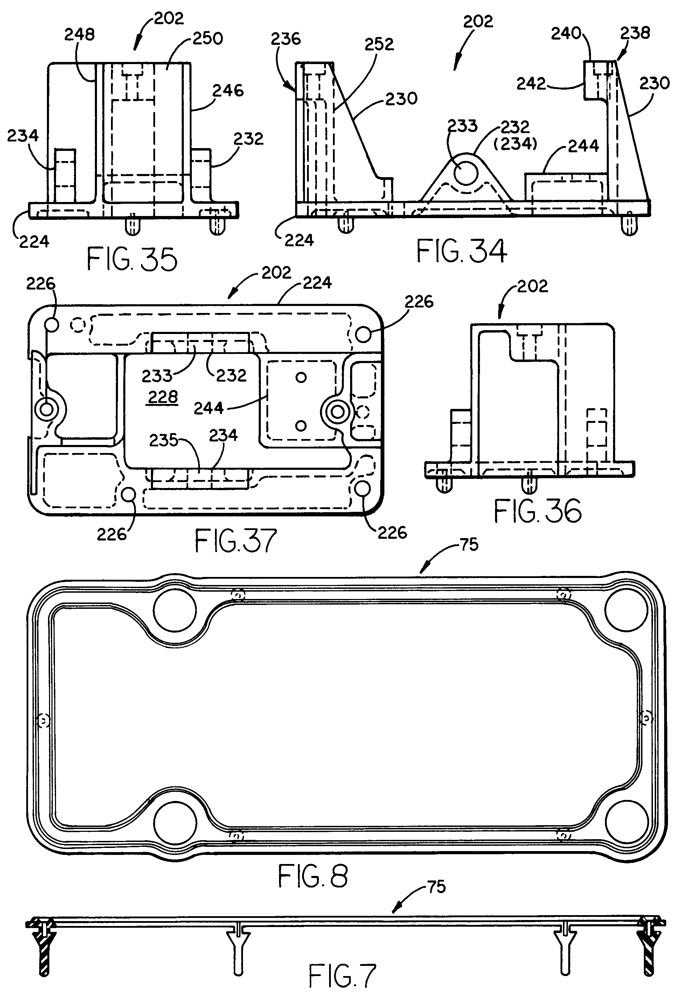

A perimeter-forming flange 73 (Fig. 3) extends around walls 61-64. A resilient seal 75 (Figs. 7-8) is positionable on flange 73 (Fig. 1) so that base 32 can be sealingly attached against a member such as a vehicle floor pan pressed against the top of perimeter-forming flange 73. Press-fit screws 76 are frictionally retained in attachment holes 68a (Fig. 1) and include a washer or head for engaging the bottom of perimeter-forming flange 73, a knurled surface for frictionally engaging attachment hole 68a in flange 66, and a threaded portion extending above perimeter-forming flange 73 for receiving a nut to securely fasten base 32 against a vehicle member such as a floor pan. Base 32 (Fig. 5) further includes four-hole forming bosses 80 defining holes 81 that extend vertically upwardly, bosses 80 being positioned in a four-cornered pattern around inside of pocket 65 for receiving screws 82 (Fig. 3). Screws 82 secure tower 34 to base 32 by threadably engaging holes 81 in bosses 80.

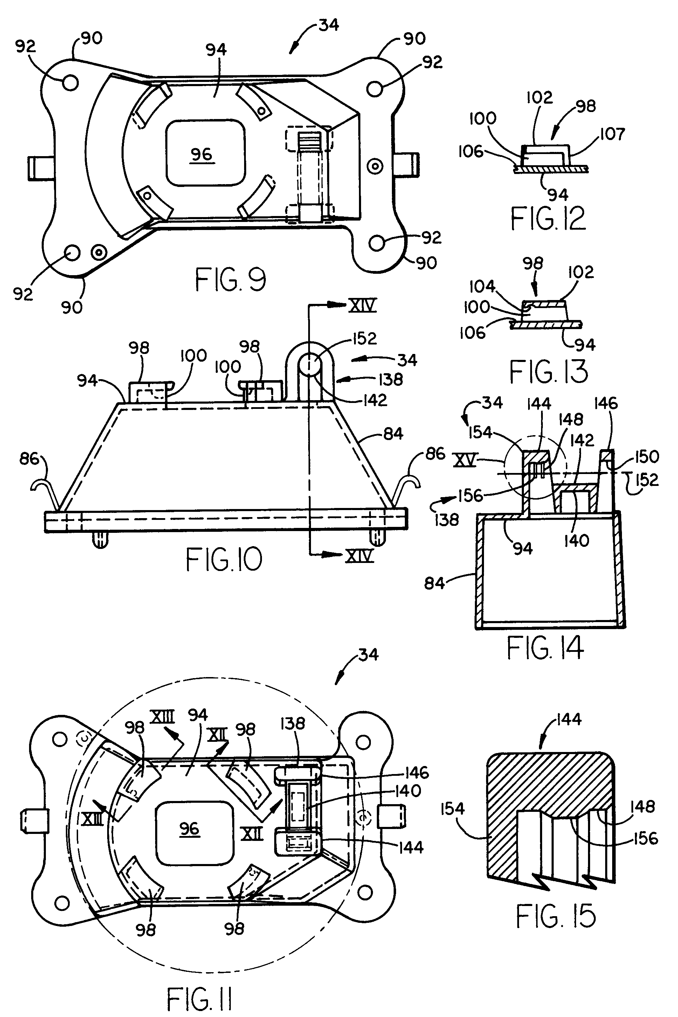

Molded polymeric tower 34 (Figs. 9-11) includes an inverted cup-shaped body 84. The lower end of body 84 includes ear-shaped flanges 90 for mateably resting on and engaging bosses 80 on base 32. Flanges 90 include holes 92, and screws 82 are extended through holes 92 and threadably into bosses 80 in a "top down" assembly. Hook-like clips 86 extend from either end of body 84 for temporarily snap-locking into an opening in the vehicle component (such as in a vehicle floor pan or in a console) for temporarily holding shifter 30 in the mating component.

The upper end of body 84 (Fig. 10) includes a top wall 94 having a centred aperture 96 (Fig. 9) for receiving the lower end 54 of shift stick 42. Four inverted L-shaped flanges 98 are located in a circular pattern on top wall 94, flanges 98 extending upwardly above top wall 94. Flanges 98 define a recess 100 between the upper leg 102 of flanges 98 and top wall 94. A dimple 104 (Fig. 13) extends from one or more of flanges 98 into corresponding recesses 100. An inlet 106 (Fig. 12) is located at one end of at least one recess 100, and a stop 107 is correspondingly located at another end of the at least one recess 100. Notably, flanges 98 are located non-symmetrically on top wall 94 so that retainer 38 must be positioned in a correct orientation on tower 34 for installation.

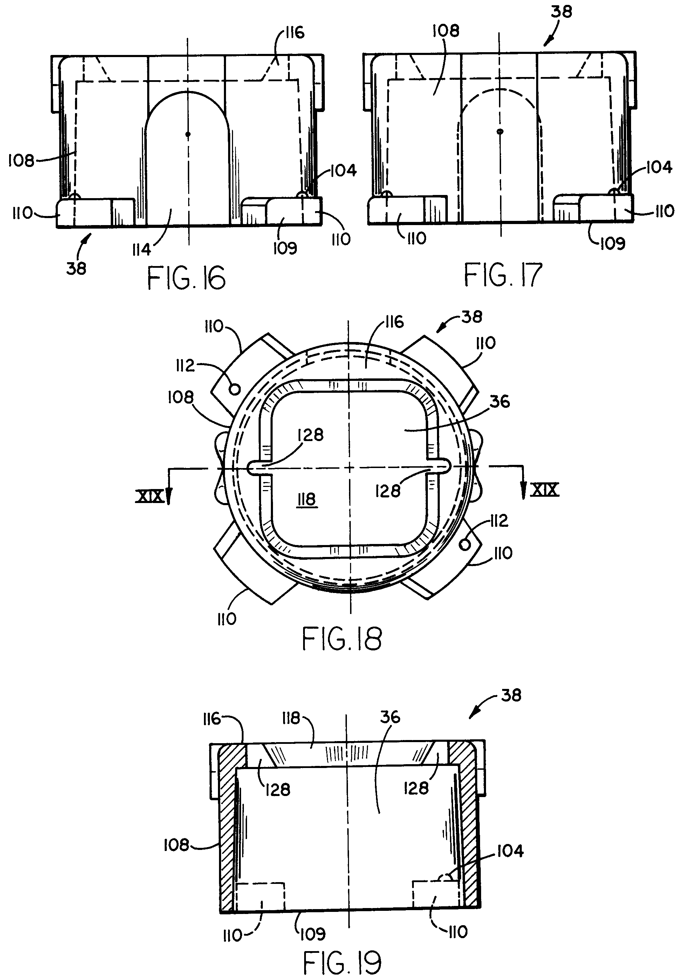

Molded retainer 38 (Figs. 16-19) includes a cylindrically-shaped sidewall 108. Four locking tabs 110 extend outwardly from the lower end of retainer 38. Tabs 110 are positioned flush with a bottom surface 109 of the retainer, on sidewall 108, and are configured to mateably engage recesses 100 in the top of tower 34. Two of tabs 110 each include a protrusion 112 positioned to engage a said dimple 104 on L-shaped flanges 98 for frictionally interlocking retainer 38 onto tower 34 once retainer 38 is rotated twistingly into position. A vertical slot 114 extends from the lower end of sidewall 108 about three quarters of the way up sidewall 108. Slot 114 is located on sidewall 108 so that, when retainer 38 is rotationally interlocked onto tower 34, slot 114 is oriented to the side of shifter 30. Slot 114 operably receives bell crank actuating arm 50 that extends laterally from shift stick 42.

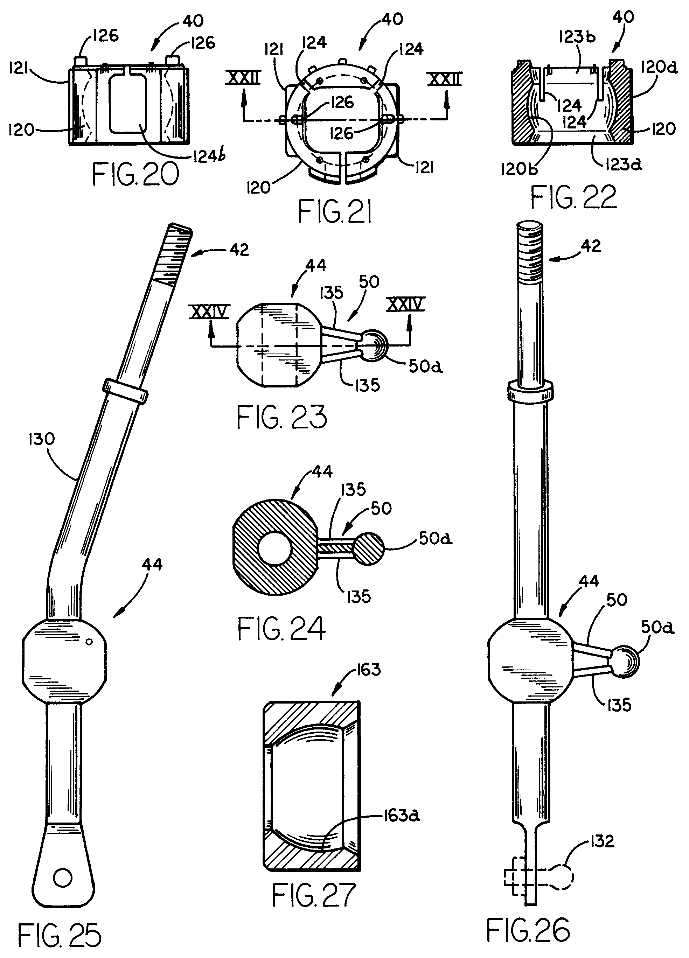

A top flange 116 extends around the top of retainer sidewall 108, and defines a square aperture 118 with raidused corners for receiving shift stick 42. The insert bushing 40 is positioned within sidewall 108 under top flange 116 and between top flange 116 and the tower body top wall 94. Bushing 40 (Figs. 20-22) includes a sidewall 120 having a cylindrically-shaped outer surface 120a with vertically extending ridges 121 spaced radially around cylindrically-shaped outer surface 120a. The inside surface 120b (Fig. 22) is curvilinearly-shaped to define a sphere for receiving ball 44. The top and the bottom of bushing sidewall 120 defines square apertures 123a and 123b defining a through hole for receiving shift stick 42. At least three vertical slots 124 are defined in the upper portion of sidewall 120 so that the upper sections of sidewall 120 defined between slots 124 can resiliently flex outwardly when ball 44 is snapped into spherical surface 123 in bushing 40. Two locator slots 128 (Fig. 18) are formed in retainer top flange 116. A pair of locating bumps 126 on bushing 40 operably engage locator slots 128 to hold bushing 40 in alignment and in position in tower 34. This further keeps bushing slot 124b in alignment with retainer slot 114 so that ball arm 50 can be extended therethrough. Alternatively, the flange 116 may be provided with bumps and the bushing with slots to achieve the same results.

Shift stick 42 includes a metal shaft 130 having a universal ball connector 132 (Fig. 26) at a lower end. The polymeric ball 44 is insert molded onto shaft 130 several centimetres above ball connector 132. Ball 44 is molded from polymeric material and includes an integrally-formed laterally extending bell-crank-actuating arm 50 (Figs. 23-24) that extends laterally from ball 44 through bushing slot 124 and retainer slot 114 (Fig. 2) . Arm 50 (Figs. 23-24) includes reinforcement ribs 135 that extend along and rigidify arm 50. The end 50a of arm 50 is spherically-shaped, and a socket-defining bushing 163 (Fig. 27) is press-fit onto the end of arm 50. Bushing 163 frictionally captures the end of arm 50, but is sufficiently loose to permit relative rotational motion between bushing 163 and the end of arm 50.

A pivot-forming stanchion 138 (Figs. 9-10 and 14) is integrally formed on tower top wall 94 adjacent flanges 98 and adjacent centred aperture 96. Stanchion 138 includes a centre section 140 including a semicylindrically-shaped depression or trough 142 in its upper surface. A pair of inverted U-shaped side sections 144 and 146 are located on either side of centre section 140. The inner arcuate surfaces 148 and 150 of U-shaped side sections 144 and 146 define a pivot forming bore 152 with depression 142 (Fig. 10) . Side section 144 is thicker than side section 146 and includes a section of material 154 that forms an end to pivot forming bore 152. An interlocking ridge 156 (Figs. 14-15) extends radially inwardly from the material of side section 144 into the area of pivot forming bore 152 for the reasons noted below.

It is noted that base 32, tower 34 and retainer 38 do not include blind surfaces or undercuts, and thus each of these parts can be injected molded without the use of a mold including cams or slides for forming blind surfaces or undercuts. This reduces tooling costs and maintenance of the tools. However, it is contemplated that the parts could include fluid surfaces or undercuts if need be.

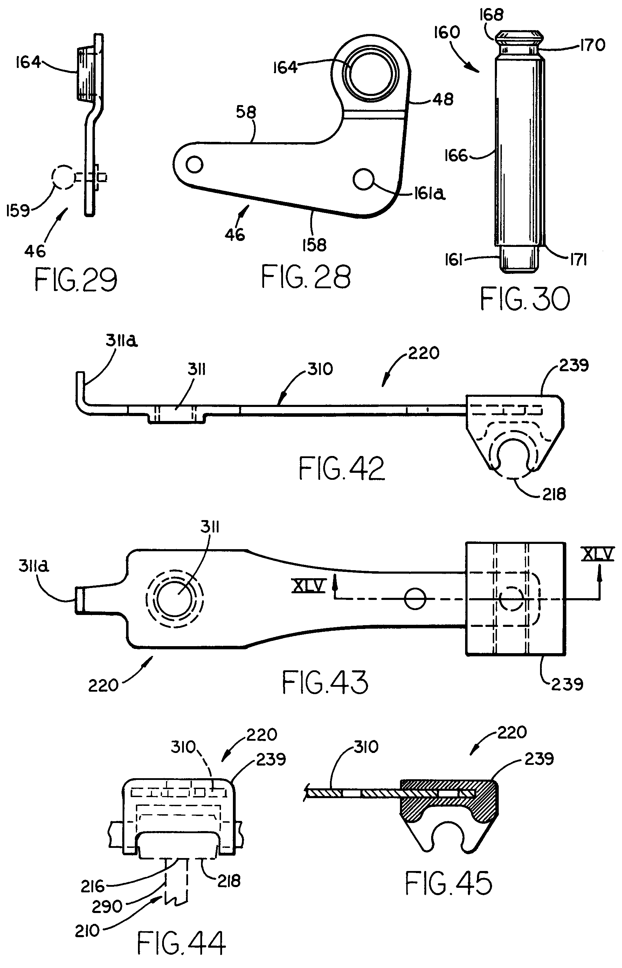

Bell crank 46 (Figs. 28-29) comprises an L-shaped sheet metal member 158. A pivot pin 160 (Fig. 30) includes a first end 161 having a reduced diameter to fit snugly and securely into a hole 161a in the centre of bell crank 46. End 161 can then be peened over to secure it within hole 161a. L-shaped bell crank 46 includes a first upper leg 48 and the second lower leg 58. Second lower leg 58 includes a universal ball connector 159 for engaging cable 56b (Fig. 3). The connector 163 (Fig. 27) includes a spherically-shaped hole 163a shaped to frictionally press-fit onto the end 50a of ball arm 134 to prevent connector 163 from axially slipping off of the end of ball arm 134. Connector 163 is configured to press-fit into and be frictionally retained within a hole 164 in the end of first upper leg 48.

Pivot pin 160 (Fig. 30) includes a shaft 166 having a diameter sized to slideably engage pivot forming bore 152 (Fig. 10) on tower 34. The end 168 of shaft 166 is tapered to facilitate extending shaft 166 into bore 152. Further, a ring-shaped depression 170 is located near the end 168 of shaft 166. Ring-shaped depression 170 is configured to receive interlocking ridge 156 (Fig. 15) on side section 144 of stanchion 138 so that the bell crank supporting pivot pin 160 can be press-fit and interlockingly secured to tower 34 without the use of separate parts. The other end 161 of pivot pin 160 has the reduced diameter end section 161 defining a shoulder 171.

The assembly of shifter 30 can be accomplished by different methods and sequences. In one form, the method includes assembling the shift stick 42 to tower 34 by positioning ball 44 (which was insert molded onto shift stick 42) in bushing 40 and by positioning these members in retainer 38. Retainer 38 is then secured to tower 34 by placing retainer 38 on tower 34 and rotating retainer 38 until locking tabs 110 interlockingly extend into recesses 100 and engage locking flanges 98 on tower 34. Bell crank 46 is then secured to tower 34 by extending crank pivot pin 160 into pivot forming bore 152 until ring-shaped depression 170 receives interlocking ridge 156 on stanchion 138. Cable 52b is connected to bell connector 132 on the lower end of shift stick 42, and cable sleeve 52a is connected by retainer 72 to base 32. Also, cable 56b is connected to ball connector 159 on the lower end of bell crank 46, and cable sleeve 56a is connected by retainer 74 to base 32. Tower 34 is then connected to base 32 by screws 82. Hook-like clips 86 can be used to temporarily hold shifter 30 in position on a mating vehicle component such as to a vehicle floor pan until base 32 and shifter 30 is secured in place. Thus, shifter 30 can be built in a "top down" manner facilitating subassembly.

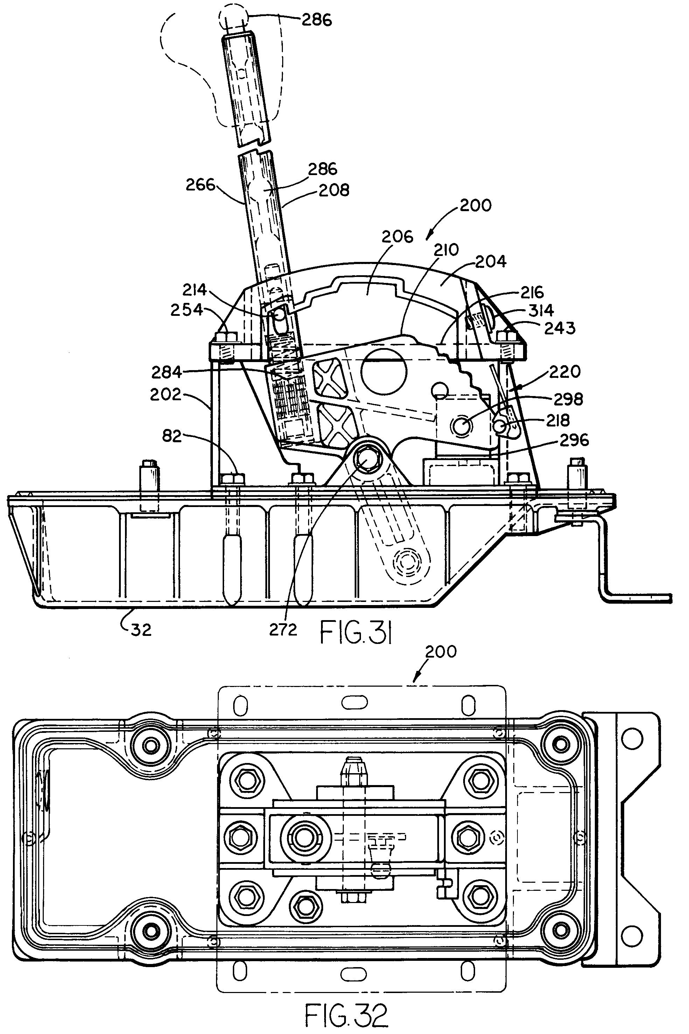

A preferred embodiment of an automatic transmission shifter 200 (Figs. 31-33) in accordance with the present invention makes use of a base 32 (previously described) and further includes a mount or tower 202 adapted to be attached to base 32. A detent plate 204 includes gear-location-defining notches 206 and is configured for attachment to mount 202. A shift stick 208 includes an insert molded body 210 defining a pivot section 270 for pivotally mounting shift stick 208 to mount 202. Shift stick 208 includes a pawl 214 for engaging gear location defining notches 206. Insert-molded body 210 further includes depressions 216 engageable by a spring biased roller 218 for defining a feel positioner 220.

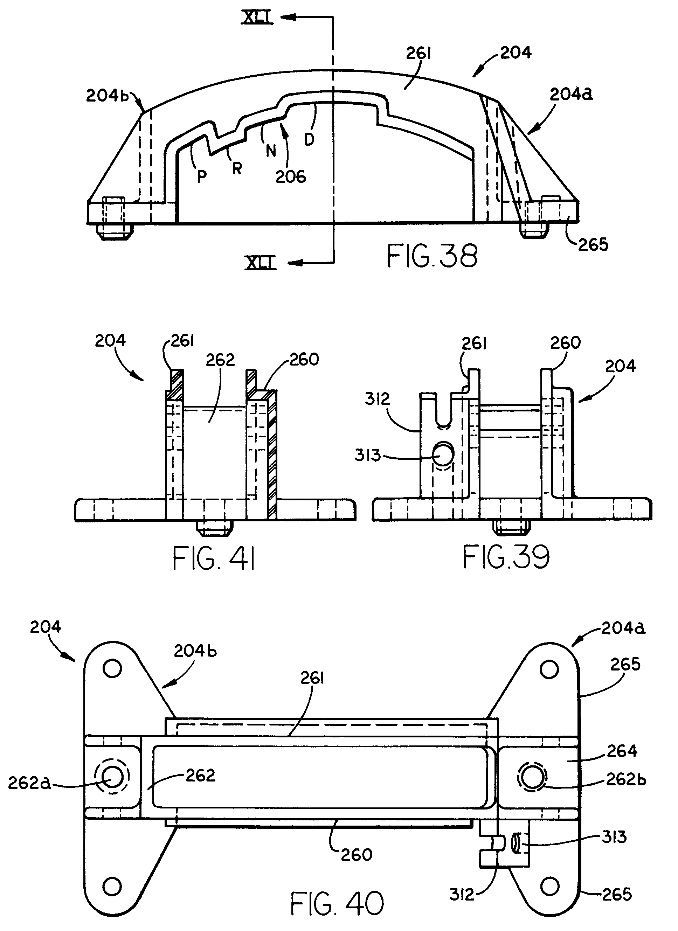

Mount 202 (Figs. 34-37) includes a lower base engaging flange 224 having attachment holes 226 that align with bosses 80 on base 32. Screws 82 (Fig. 31) extend through holes 226 and threadably into bosses 80 to secure mount 202 to base 32. Flange 224 extends around the perimeter of mount 202 and defines an aperture 228 generally centrally located over pocket 65 in base 32. Flange 224 includes reinforcement flanges and ribs 230 as required to rigidify mount 202 and to reduce large sections of material that inhibit uniform cooling when molding mount 202. A pair of pivot-forming flanges 232 and 234 including pivot defining holes 233 and 235 extend upwardly from the side sections of flange 224 adjacent elongated central aperture 228.

Front and rear stands 236 and 238 (Fig. 34) extend upwardly from base-engaging flange 224. Rear stand 238 (Fig. 36) defines an upper surface 240 for stably supporting a rear end 204a of detent plate 204 (Fig. 38), and a hole-forming boss 242 for receiving a screw 243 to secure the rear end 204a to rear stand 238. A solenoid-mounting surface 244 is located inside of rear stand 238 adjacent elongated aperture 228, solenoid mounting surface 244 projecting into aperture 228.

Front stand 236 includes right and left upright wall sections 246 and 248 (Fig. 35) interconnected by a transverse wall 250. Upright sections 246 and 248 and transverse wall section 250 define an upper surface configured to stably support the front end 204b of detent plate 204. A hole-forming boss 252 is located in transverse wall section 250, and a screw 254 (Fig. 31) secures the front end 204b of detent plate 204 to mount 202.

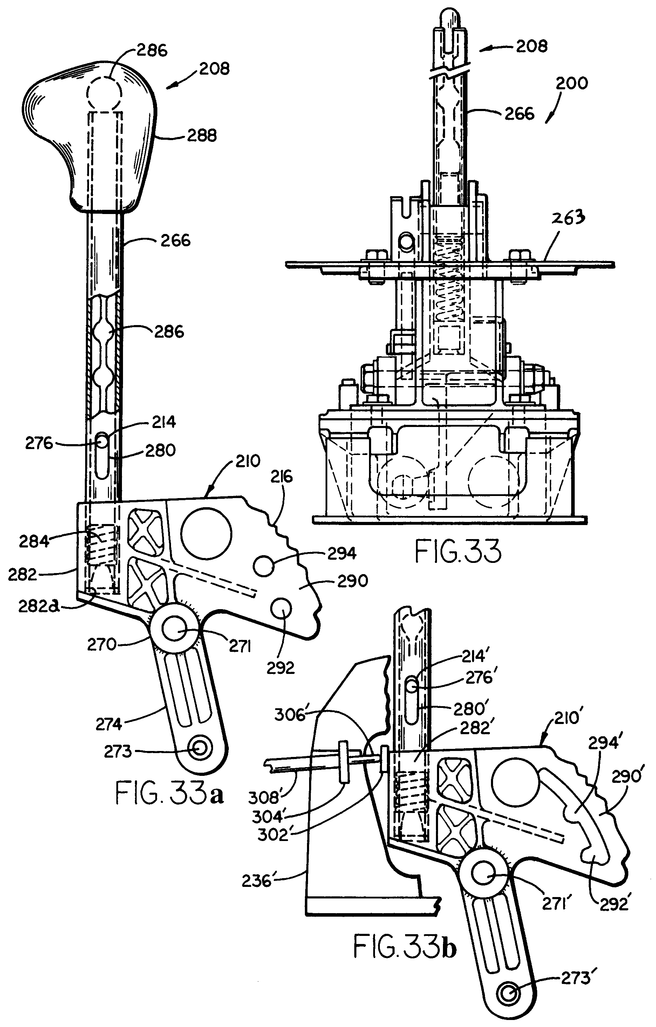

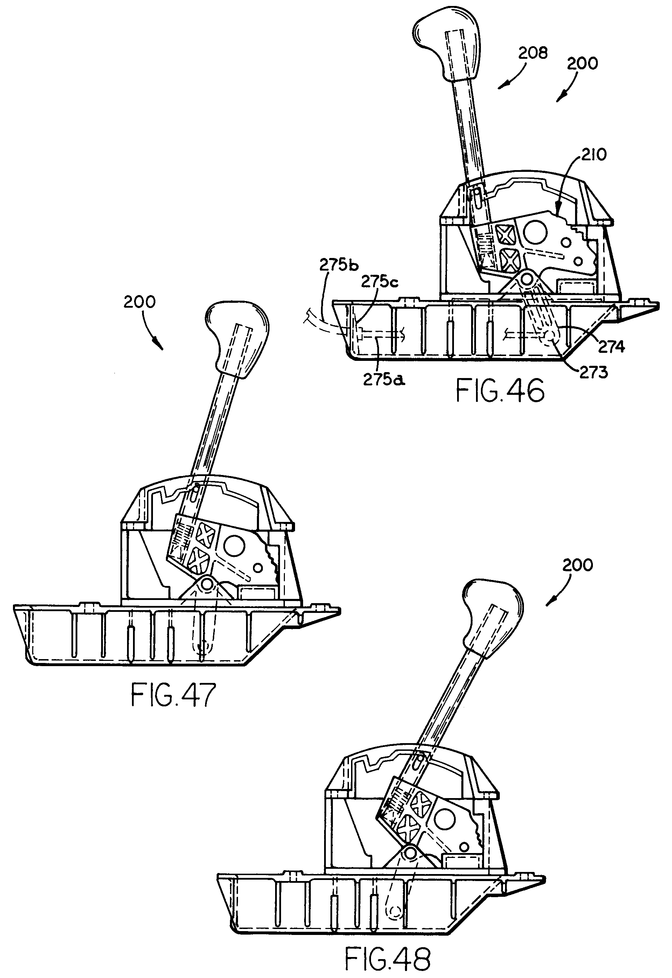

Detent plate 204 (Figs. 38-40) includes a pair of arching side members 260 and 261 that extend parallel each other, which side members are connected at their ends by a front flange 262 and a rear flange 264. Front flange 262 engages and rests on front stand 236, and includes a hole 262a that aligns with boss 252. Screw 254 extends through the hole 262b into boss 252 to secure detent plate 204 to mount 202 in the front. Rear flange 264 engages and rests on rear stand 238, and includes a hole 262b that aligns with boss 242. Screw 243 extends through the hole into boss 242 to secure detent plate 204 to mount 202 in the rear. Flanges 265 are located at the ends of arching side members 260 and 261 and include holes for receiving screws to secure a cover or a plate 263 to shifter 200 over arching side members 260 and 261. The lower edges of arching side members 260 and 261 include identical gear location defining notches 206. For example, notches 206 (Fig. 38) define a park position "P", a reverse position "R", a neutral position "N", a drive position "D" and other lower drive gear positions. Shift stick 208 (Fig. 33a) includes a metal tubular shaft 266 and insert molded body 210 which is insert-molded onto shift stick 208. Molded body 210 includes a pivot-forming section 270 that fits mateably between pivot-forming flanges 232 and 234 (Fig. 37). Pivot-forming section 270 defines a bore 271 for receiving a pivot pin 272 (Fig. 31). Pivot pin 272 press-fittingly frictionally engages the holes in pivot-forming flanges 232 and 234, and pivotally slides within pivot forming section 270, thus pivotally capturing molded body 210 between pivot forming flanges 232 and 234 and also pivotally mounting shift stick 208 to mount 202. A transmission-engaging arm 274 (Figs. 33a and 46) extends from molded body 210 generally below pivot forming section 270 for engaging a transmission shift cable 275. Transmission shift cable 275 is operably connected to body 32 in a manner not unlike cables 52 and 54 on manual shifter 30. Specifically, transmission shift cable 275 includes a telescoping cable 275a that attaches to a universal ball connector 273 on transmission engaging arm 274, and a cable sleeve 275b that is retained to hole 68 in base 32 by a retainer clip 275c. Hole 70 in base 32 is plugged, or can be molded with a punch-out plug so that base 32 can be optionally used for either shifter 200 or shifter 30.

The pawl 214 (Fig. 33a) is slideably mounted within tubular shaft 266 of shift stick 208. Pawl 214 includes opposing protruding pawl ends 276 that protrude out of opposing slots 280 in the sides of tubular shaft 266. Body 210 includes a shaft-supporting end 282 having a slug of material or closing means 282a closing the end of tubular shaft 266, and a spring 284 is mounted between the slug 282a and pawl 214. A straw 286 operably connects pawl 214 to a thumb actuatable button 286 on shifter handle 288. Shifter handle 288 is secured to the upper end of shift stick shaft 266 and straw 286 is located within tubular shaft 266. Various mechanisms for operably connecting button 286 to pawl 214 are known, and need not be disclosed in detail herein.

Shaft 266 of shift stick 208 extends upwardly from body 210 between the arching side members 260 and 261 of detent plate 204 (Fig. 33a). This positions the opposing pawl ends 276 operably under gear-location-defining notches 206 on detent plate arching side members 260 and 261. Since each end 276 of pawl 214 engages corresponding notches 206 simultaneously, there is a balanced load on pawl 214 and it does not tend to skew to one side or wear unevenly.

Body 210 further includes a "rooster tail" or trailing end 290 (Fig. 33a) located on the opposite end of body 210 from the shaft-supporting end 282. Pivot forming section 270 is located generally between shaft supporting end 282 and trailing end 290. Trailing end 290 includes a pair of holes 292 and 294 located along an arcuate path equal distance from pivot-pin-receiving hole 271. A solenoid 296 (Figs. 31) is positioned on solenoid mounting surface 244 so that an extendable solenoid pin 298 can be extended from solenoid 296 into and through hole 292 when shift stick 208 is in the park position "P". When solenoid pin 298 is extended into hole 292, shift stick 208 cannot be moved out of park. Further, extendable solenoid pin 298 can be extended through hole 294 when shift stick 208 is in the neutral position "N". Solenoid 296 is operably connected to a vehicle electrical system, such as to meet US federal or other motor vehicle safety standards. Thus, for example, the solenoid 296 can be used as a brake interlock device wherein the brake must be pressed in order to energize solenoid 196 and retract solenoid extendable pin 298 before shift stick 208 can be shifted. Other arrangements are also contemplated, such as providing an arcuate slot (not shown) and a notched pin (not shown) that can ride along slot 300 that is retractable to lock shift stick 208 in the park position "P" when retracted, but is extendable to release shift stick 208 for movement.

In a modified shifter 200' (Fig. 33b) components identical or comparable to shifter 200 are identified with the same number, but with the addition of a prime symbol. Modified shifter 200' has a shift stick body 210' which includes a laterally extending flange 302' located on body 210' in the front adjacent shaft supporting section 282', and a cable-sleeve-engaging flange 304' is located on the side of front stand 236'. This allows an ignition key interlocking cable 308' including telescoping cable 306' to be operably connected to shifter 200' so that, if shift lever 208' is not in park, ignition key interlocking cable 306' would not be abuttingly pressed by flange 302' and thus the ignition key could not be removed. In this way, a brake ignition key transmission safety interlock (i.e. "BITSI") system could be attached to shifter 200'. For example, a BITSI system is described in US-A-5211271.

The rear and upper surface of trailing end 290 of body 210 includes depressions 216 corresponding to the various gear positions "P", "R", "N", and "D". The roller 218 (Fig. 44) engages depressions 216 to provide the "feel positioner" 220 which gives a more aesthetic feel when shifting shift stick 208 between gear-location-defining positions. Feel position 220 (Figs. 42-45) includes a leaf spring 310 secured to a mounting surface 312 (Figs. 39-40) on the inside of rear stand 238. A roller carrier 239 is insert molded onto the free end of leaf spring 310, and roller 218 is pivotally mounted in roller carrier 239. Leaf spring 310 biases roller 218 into engagement with depressions 216. A hole 313 (Fig. 40) on mounting surface 312 and a second hole 311 (Fig. 43) on spring 310 allows the spring 310 to be secured to rear stand 238 by a screw 314 (Fig. 31). By locating shift stick 208 in the park position "P" and then tightening screw 314, feel positioner 220 (including leaf spring 310 and roller 218) is automatically adjusted to a proper position wherein roller 218 is located in the corresponding depression 216 when shift stick 308 is in the park position "P". The feel positioner provides an aesthetic and comfortable feel to an operator moving the shift lever between gear engaging positions.

It is noted that, each of shifter 200, base 32, mount 202, detent plate 204 and body 210 are molded of polymeric materials and are designed to eliminate blind holes and undercut surfaces so that cams and slides do not need to be utilized on molds for molding these parts. Further, it is noted that, much like shifter 30, shifter 200 can be assembled in a "top down" manner.

In operation, shifter stick 208 cannot be moved until a brake pedal (not shown) is pressed such that solenoid 296 is actuated and solenoid pin 298 is retracted from hole 292 (or hole 294). At such time, thumb button 286 on shift stick 208 is depressed to disengage pawl 214 from the notch 206 defining park position "P". As shift stick 208 is pivoted to drive gear position "D", trailing end 290 moves relative to roller 218, causing depressions 216 to roll under roller 218 and to give the operator a comfortable aesthetic feel to the movement of shift stick 208.

Thus, there are provided shifters that are made from multiple parts, several which are molded and which facilitate a quick "top down" assembly without the need for skilled labour or complex machinery or fixtures.

In the foregoing description it will be readily appreciated by those skilled in the art that modifications may be made to the invention without departing from the concepts disclosed herein.

## Claims

1. A manual transmission shifter (30) for vehicles, said shifter including a shift stick (42) movable between gear engaging positions, comprising: a base (32) adapted for mounting to a vehicle; a tower (34) attached to said base defining tab engaging flanges (90); a socket defining bushing (40) positioned on said tower; said shift stick including a ball defining member (44) mateably pivotally engaging said socket defining bushing; and a retainer (38) including tabs (110) configured to snap-lock into said tab engaging flanges of said tower to retain said ball defining member in operative engagement with said socket defining bushing and to retain said socket defining bushing to said tower.

2. A transmission shifter as claimed in claim 1 wherein said tower, said socket defining bushing, said ball-defining member and said retainer are made of polymeric materials.

3. A transmission shifter as claimed in claim 1 or claim 2 wherein said ball-defining member includes an integral arm extending laterally from said ball-defining member; and a bell crank (46) is provided, pivotally secured to said tower; said bell crank including a first leg (48) operably connected to said arm of said ball defining member, and a second leg (58); said shift stick including a lower portion (132) located below said ball-defining member, said shift stick being pivotable about first and second orthogonal axes; said lower end of said shift stick being moved generally along a first direction when said shift stick is pivoted about said first axis; said second leg (58) of said bell crank being moved generally parallel said first direction when said shift stick is pivoted about said second axis.

4. A transmission shifter as claimed in claim 1 or claim 2 or claim 3 including a pivot pin for pivotally mounting said crank to said tower; said tower including a pivot pin receiving structure (138), said pivot pin being configured to snap-lock into said pivot pin receiving structure, whereby the assembly of said pivot pin to said pivot pin receiving structure can be made without the use of separate fasteners.

5. A method of assembling transmission shifters, comprising: providing a base (32) adapted for mounting to a vehicle, said base including at least one cable sleeve engaging connector (72,74,275c); selecting one of a manual transmission tower (34) and an automatic transmission tower (202); selecting one of a manual transmission shift stick (42) and an automatic transmission shift stick (208,208'), said one stick including a cable connector (132,273,273') for engaging a telescopable cable (52b,275a); assembling said one tower to said base and said one shift stick to said one tower; providing transmission engaging cables including a cable sleeve (52a,275b) and a telescopable cable (52b,275a); and attaching said cable sleeve to said cable sleeve engaging connector and said telescopable cable to said cable connector.

6. An automatic transmission shifter (200,200') for vehicles, said shifter including a shift stick (208,208') moveable between gear defining positions, comprising: a base (32) adapted for mounting to a vehicle, said base including a mount (202) for pivotally mounting said shift stick for movement about an axis of rotation; a detent plate (204) attached to said base including notches (206) defining said gear defining positions; a pawl (214,214') operably mounted to said shift stick for engaging said notches; and a feel positioner (220) including a body (210) attached to said shift stick for defining depressions and a spring biased roller (218) attached to said base for engaging said depressions whereby, as said shift stick is moved, said depressions move relative to said base and said roller rolls over said depressions.

7. An automatic transmission shifter, comprising: a base (32) adapted for mounting to a vehicle, said base including a mount (202) for pivotally mounting a shift stick (208,208') for movement about an axis of rotation; a detent plate (204) attached to said base including notches (206) defining gear-defining positions; a pawl (214,214') operably mounted to said shift stick for engaging said notches; said shift stick including an insert molded body (210) including a shift stick supporting section (282), a pivot forming section (270) for pivotally engaging said base, and a shifter interlock hole (292,294); and a solenoid (296) attached to said base, said solenoid including an extendable solenoid pin (298), said interlock hole being aligned with said extendable pin when said shift stick is in a park position, said solenoid being operably attached to an electrical system of said vehicle for extending and retracting said extendable pin to control movement of said shift stick from said park position.

8. An automatic transmission shifter as claimed in claim 7 wherein said detent plate (204) includes a pair of parallel sections (260,261) defining identical pairs of said notches, said shift stick being located between said pair of parallel sections, said pawl including a pair of ends (276,276') that protrude from said shift stick and operably engage said identical pairs of notches.

9. A method of assembling a transmission shifter, comprising: providing a base (32) adapted for mounting to a vehicle; assembling a tower (34) along a first direction onto said base; assembling a socket defining bushing (40), a shift stick supporting ball (44) configured to engage said socket defining bushing, and a retainer (38) for retaining said bushing and said ball together on said tower along and parallel said first direction; and rotating said retainer about an axis parallel said first direction to twist lock said retainer onto said tower and, thus secure said assembly together.

10. A method as claimed in claim 9 including providing a bell crank (46) and means (138) on said tower for receiving a pivot for the bell crank, and including a step of snap-locking said bell crank pivot into said pivot receiving means on said tower.

11. A method of assembling a transmission shifter, comprising: providing a base (32) adapted for mounting to a vehicle; assembling a mount (202) to said base along a first direction; assembling a detent plate (204) to said mount parallel said first direction; and assembling a shift stick (208,208') to said mount parallel said first direction and pivotally securing said shift stick to said mount.

12. A method as claimed in claim 11 wherein said shift stick includes a body (210) that extends laterally from said shift stick, said body defining depressions (216), and including a spring biased roller (218) attached to said detent plate that engages said depressions to thus provide a comfortable feel to an operator shifting said shift stick.

13. A transmission shifter (30) for vehicles, said shifter including a shift stick (42) moveable between gear positions, comprising: a base (32) adapted for mounting to a vehicle; a bell crank (46) including a pivot pin (160), said pivot pin including an end, said bell crank including a first leg (48) operably connected to said shift stick and a second leg (58) configured for connection to a transmission control cable (56b); a tower (34) mounted on said base for pivotally supporting said shift stick, said tower including a pin-receiving structure (138) for receiving said pivot pin to pivotally support said bell crank; one of said pivot pin end and said pin receiving structure including a radially extending depression (170) and the other of said pivot pin end and pin receiving structure including a mating ridge (156) for frictionally engaging said radially extending depression so that said pivot pin, after being installed, is axially retained in said pin receiving structure without the use of separate fasteners or secondary operations.

14. A transmission shifter as claimed in claim 13 wherein said tower (34) is molded of polymeric material.
